Europäisches Patentamt

European Patent Office

Office européen des brevets

(11) Veröffentlichungsnummer: **0 461 686 A1**

# (12) EUROPÄISCHE PATENTANMELDUNG

(21) Anmeldenummer: **91201022.0**

(22) Anmeldetag: **29.04.91**

(51) Int. Cl.5: **C02F 9/00, C01G 23/00, C01G 25/00, C23C 22/34**

(30) Priorität: **11.06.90 DE 4018647**

(43) Veröffentlichungstag der Anmeldung:
**18.12.91 Patentblatt 91/51**

(84) Benannte Vertragsstaaten:
**BE DE ES FR GB IT NL SE**

(71) Anmelder: **METALLGESELLSCHAFT Aktiengesellschaft**
**Reuterweg 14**
**W-6000 Frankfurt am Main(DE)**
(84) **DE ES GB IT NL SE**

Anmelder: **Société Continentale Parker**
**51, Rue Pierre**
**F-92111 Clichy(FR)**
(84) **BE FR**

(72) Erfinder: **Kolberg, Thomas**
**Friedrich-Ebert-Strasse 49**
**W-6148 Heppenheim(DE)**
Erfinder: **Gehmecker, Horst, Dr.**
**Zaunkönigweg 31**
**W-6238 Hofheim 3(DE)**
Erfinder: **Heitbaum, Joachim, Prof. Dr.**
**Friedrichsdorfer Strasse 35**
**W-6380 Bad Homburg(DE)**

(74) Vertreter: **Rieger, Harald, Dr. et al**
**Reuterweg 14**
**W-6000 Frankfurt a.M.(DE)**

(54) Verfahren zur Abtrennung von Titan und Zirkonium aus wässrigen Lösungen.

(57) Bei einem Verfahren zur Abtrennung von komplex gebundenem Titan und/oder Zirkonium aus sauren, wäßrigen Lösungen wird die das komplex gebundene Titan und/oder Zirkonium enthaltende Lösung durch Anhebung des pH-Wertes auf mindestens 8 konditioniert, ein dabei evtl. entstehender Niederschlag entfernt und die derart behandelte Lösung über eine aus einem Kationenaustauscher und einem Anionenaustauscher bestehende Ionenaustauscheranlage geleitet.

Vorzugsweise leitet man die Lösung über eine Ionenaustauscheranlage, die den Kationenaustauscher in der $H^+$-Form und den Anionenaustauscher in der $OH^-$-Form enthält.

Das Verfahren ist insbesondere für die Behandlung von Lösungen der chemischen Oberflächenbehandlung, vorzugsweise von Metallen, die Titan und/oder Zirkonium in Form von Fluorokomplexen enthalten, bestimmt.

EP 0 461 686 A1

Die Erfindung betrifft ein Verfahren zur Abtrennung von komplex gebundenem Titan und/oder Zirkonium aus sauren, wäßrigen Lösungen sowie dessen Anwendung auf die Behandlung von Lösungen der chemischen Oberflächenbehandlung.

Komplexe Verbindungen des Titans und/oder Zirkoniums werden in vielen Bereichen industriell eingesetzt. In der chemischen Oberflächenbehandlung von Metallen werden blanke oder zuvor konversionsbeschichtete Oberflächen z.B. mit Lösungen von komplexen Fluoriden des Titans und/oder Zirkoniums passiviert, um z.B. eine höhere Korrosionsbeständigkeit und Lackhaftung anschließend aufgebrachter organischer Beschichtungen zu erzielen.

An derartige passivierende Nachbehandlungen schließt sich in der Regel eine Spülung mit vollentsalztem Wasser an, wobei durch Übertrag mit den Werkstücken Passivierungsmittel in dieses Spülbad gelangt und den kontinuierlichen oder diskontinuierlichen Verwurf von Spülwasser notwendig macht.

Aufgabe der Erfindung ist es, ein Verfahren zur Abtrennung von komplex gebundenem Titan und/oder Zirkonium aus wäßrigen Lösungen bereitzustellen, das zu möglichst reinem, wiederverwendbaren Wasser führt und zudem ökonomisch in der Durchführung ist.

Die Aufgabe wird gelöst, indem das Verfahren der eingangs genannten Art entsprechend der Erfindung in der Weise ausgestaltet wird, daß man die das komplex gebundene Titan und/oder Zirkonium enthaltende Lösung durch Anhebung des pH-Wertes auf mindestens 8 konditioniert, einen dabei evtl. entstehenden Niederschlag entfernt und die derart behandelte Lösung über eine aus einem Kationenaustauscher und einem Anionenaustauscher bestehende Ionenaustauscheranlage leitet.

Zweckmäßigerweise hebt man den pH-Wert der Lösung in der Stufe der Konditionierung auf max. 13 an. Eine weitere pH-Wert-Anhebung ergibt keine zusätzliche Wirkung und ist lediglich mit einer an sich unnötigen Ionenbeladung der Lösung verbunden.

Gemäß einer weiteren bevorzugten Ausgestaltung der Erfindung setzt man zur Anhebung des pH-Wertes Natriumhydroxid, Kaliumhydroxid, Natriumcarbonat, Kaliumcarbonat, Ammoniumhydroxid und/oder Kalziumhydroxid ein.

Je nach Konzentration der behandelten Lösung an komplex gebundenem Titan und/oder Zirkonium entsteht bei Anhebung des pH-Wertes auf mindestens 8 ein Niederschlag, der auf herkömmliche Weise, z.B. mit Hilfe eines Filters, eines Absetzbehälters, eines Schrägklärers oder einer Zentrifuge entfernt wird.

Im Anschluß hieran wird die Lösung in die Ionenaustauscher-Anlage geleitet. Diese Anlage kann die Austauscher in weitgehend beliebiger Form enthalten. Besonders vorteilhaft ist es jedoch, wenn man die Lösung über eine Ionenaustauscheranlage leitet, die den Kationenaustauscher in der $H^+$-Form und den Anionenaustauscher in der $OH^-$-Form enthält. Auf diese Weise gelangt man zu reinem Wasser, das sich wiederverwenden läßt. Bei Anwendung der vorgenannten, bevorzugten Ausführungsform der Erfindung erfolgt die Regenerierung des Kationenaustauschers in an sich bekannter Weise, beispielsweise mit salz- oder schwefelsauren Eluenten, die des Anionenaustauschers mittels natriumhydroxidhaltigen Eluenten.

Eine besonders günstige Ausgestaltung dieses Teilprozesses wird durch Verwendung eines schwefelsauren Eluenten erreicht. Denn durch eine anschließende Neutralisation mit Kalziumhydroxid bzw. Kalkmilch und Ausfällung von schwerlöslichem Kalziumsulfat (Gips) wird die Salzkonzentration in gereinigtem Wasser erheblich verringert.

Das erfindungsgemäße Verfahren ist insbesondere auf die Behandlung von Lösungen der chemischen Oberflächenbehandlung, insbesondere von Metallen, anwendbar. Hierbei kann es sich um Spüllösungen handeln, die aus der Wasserspülung von Konversionsüberzügen oder passivierend nachgespülten Konversionsüberzügen stammen; es können aber auch abgearbeitete Lösungen sein, die der Erzeugung von Konversionsüberzügen oder der passivierenden Nachspülung von Konversionsüberzügen dienten. Mit besonderem Vorteil ist das Verfahren auf Lösungen der vorgenannten Art anwendbar, die Titan und/oder Zirkonium in Form von Fluorokomplexen enthalten.

Die Erfindung wird anhand des folgenden Beispiels beispielsweise und näher erläutert.

Beispiel
- - - -

Ein Spülwasser, das bei der Wasserspülung von passivierend nachgespülten Phosphatüberzügen anfällt, wies die nachstehende Zusammensetzung auf:

```
14 mg/l   Zirkonium

18 mg/l   Fluorid

 2 mg/l   Aluminium

 2 mg/l   Ammonium

10 mg/l   Zink

 4 mg/l   Mangan

 2 mg/l   Nickel

10 mg/l   Phosphat (berechnet als P₂O₅)
```

pH-Wert:        4,4
Leitfähigkeit:   60 μS/cm

Durch Zugabe von 40%iger Natriumhydroxidlösung wurde der pH-Wert auf 9,5 angehoben und der entstandene Niederschlag mittels Sackfilter (1 μm Porenweite) abfiltriert. Die resultierende Lösung wurde nacheinander über einen Kationenaustauscher ($H^+$-Form) und einen Anionenaustauscher ($OH^-$-Form) geleitet. Die dabei eingehaltenen Trennbedingungen waren wie folgt:

Temperatur:                          20 +/- 1 °C
Kolonnenvolumen:                     80 dm³
Flußrate:                            0,1 dm³ / dm² min
Leitfähigkeit der ablaufenden Lösung:    < 2μS/cm

Für die Regeneration der Ionenaustauschers wurden 15%ige Schwefelsäure (Kationenaustauscher) und 5%ige Natriumhydroxidlösung (Anionenaustauscher) verwendet.

Kapazität und Austauschgeschwindigkeit der Ionenaustauscherkolonnen war über den Versuchszeitraum von 50 Absorptions-/Desorptions-Zyklen im Rahmen der Meßgenauigkeit konstant.

**Patentansprüche**

1. Verfahren zur Abtrennung von komplex gebundenem Titan und/oder Zirkonium aus sauren, wäßrigen Lösungen, dadurch gekennzeichnet, daß man die das komplex gebundene Titan und/oder Zirkonium enthaltende Lösung durch Anhebung des pH-Wertes auf mindestens 8 konditioniert, einen dabei evtl. entstehenden Niederschlag entfernt und die derart behandelte Lösung über eine aus einem Kationenaustauscher und einem Anionenaustauscher bestehende Ionenaustauscheranlage leitet.

2. Verfahren nach Anspruch 1, dadurch gekennzeichnet, daß man den pH-Wert der Lösung auf max. 13 anhebt

3. Verfahren nach Anspruch 1 oder 2, dadurch gekennzeichnet, daß man zur Anhebung des pH-Wertes Natriumhydroxid, Kaliumhydroxid, Natriumcarbonat, Kaliumcarbonat, Ammoniumhydroxid und/oder Kalziumhydroxid einsetzt.

4. Verfahren nach Anspruch 1, 2 oder 3, dadurch gekennzeichnet, daß man die Lösung über eine Ionenaustauscheranlage leitet, die den Kationenaustauscher in der $H^+$-Form und den Anionenaustauscher in der $OH^-$-Form enthält.

5. Anwendung des Verfahrens nach einem oder mehreren der Ansprüche 1 bis 4 auf die Behandlung von Lösungen der chemischen Oberflächenbehandlung, insbesondere von Metallen.

6. Anwendung gemäß Anspruch 5 auf die Behandlung von Lösungen, die Titan und/oder Zirkonium in Form von Fluorokomplexen enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 341 636   (U.M. HARDER)<br>* Patentansprüche *<br>– – – | 1 | C 02 F 9/00<br>C 01 G 23/00<br>C 01 G 25/00<br>C 23 C 22/34 |
| A | GB-A-1 345 716   (OXY EFFLUENT CONTROL)<br>– – – | | |
| A | US-A-4 808 316   (K. OTOMURA)<br>– – – | | |
| A | JNAL. OF APPLIED CHEM. OF USSR, Band 52, Nr. 7, Part 1, Juli 1979, Seiten 1410-1413, New York, US; V.S. PAK-HOLKOV et al.: "Sorption of ions of elements of the titanium subgroup, niobium, and tantalum from $MeF_4(MeF_5)$-$NH_4F.HF$)-$H_2O$ solutions by anion-exchangers and amphoteric ion-exchange"<br>– – – – – | | |

**RECHERCHIERTE SACHGEBIETE (Int. Cl.5)**

C 02 F
C 01 G
C 23 C

Der vorliegende Recherchenbericht wurde für alle Patentansprüche erstellt

| Recherchenort | Abschlußdatum der Recherche | Prüfer |
|---|---|---|
| Den Haag | 11 September 91 | TORFS F.M.G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument